# EUROPÄISCHE PATENTSCHRIFT

(11) **EP 0 976 113 B1**
(45) Veröffentlichungstag und Bekanntmachung des Hinweises auf die Patenterteilung: **27.02.2002**
(21) Anmeldenummer: 98924102.1
(22) Anmeldetag: 08.04.1998
(51) Int. Cl.: G07F 7/10, G07F 19/00

(54) **VERFAHREN ZUR ERZEUGUNG EINES GUTHABENS MITTELS EINES VORAUSBEZAHLTEN WERTGUTSCHEINS**
PROCESS FOR GENERATING A CREDIT BY MEANS OF A PREPAID VOUCHER
PROCEDE POUR GENERER UN CREDIT PAR VERSEMENT AU PREALABLE D'UN BON

(30) Priorität: 17.04.1997 DE 19716068
(43) Veröffentlichungstag der Anmeldung: 02.02.2000
(73) Patentinhaber: Giesecke & Devrient GmbH, 81677 München (DE)
(72) Erfinder: MÜLLER, Achim, D-10627 Berlin (DE); DREYER, Manfredo, D-89278 Nersingen (DE)
(74) Vertreter: Klunker . Schmitt-Nilson . Hirsch
(86) Internationale Anmeldenummer: EP9802060
(87) Internationale Veröffentlichungsnummer: WO9848388

(56) Entgegenhaltungen:
- EP-A- 0 572 991
- EP-A- 0 671 712
- EP-A- 0 786 747
- GB-A- 2 252 270

## Beschreibung

Die Erfindung betrifft ein Verfahren und ein System zur Erzeugung eines Guthabens mittels eines vorausbezahlten Wertgutscheins sowie den dabei eingesetzten Wertgutschein. Das Guthaben wird von einem Kunden bei einem Diensteanbieter eingerichtet. Jedes Mal, wenn.der Kunde einen Dienst des Diensteanbieters in Anspruch nimmt, wird das Guthaben um den Gegenwert des Dienstes verringert.

Bei Mobilfunksystemen ist bereits ein Abrechnungsverfahren bekannt, bei dem jedem Kunden eine Sicherheitschipkarte (SIM) zugeordnet wird. Ein Telefongespräch ist nur dann möglich, wenn in das benutzte Mobiltelefon eine derartige Sicherheitschipkarte eingeführt ist. Im Vorfeld des Gesprächs übermittelt das Mobiltelefon auf der Sicherheitschipkarte gespeicherte Identifizierungsdaten an den Diensteanbieter, mit deren Hilfe das Gespräch zu Abrechnungszwecken einem Kundenkonto zugeordnet werden kann. Am Ende des Abrechnungszeitraums erhält der Kunde eine Rechnung über sämtliche mit seiner Sicherheitschipkarte geführten Gespräche. Dieses Abrechnungsverfahren erfordert, dass für jeden Kunden ein Konto geführt wird, das zuvor beantragt und eingerichtet werden muss. Dies bringt sowohl auf Seiten des Diensteanbieters als auch auf Seiten des Kunden einen gewissen Aufwand mit sich. Weiterhin setzt die Einrichtung eines Kundenkontos die Kreditwürdigkeit des Kunden voraus, da die Gespräche vom Kunden erst nachträglich am Ende des jeweiligen Abrechnungszeitraums bezahlt werden. Für Personen mit mangelhafter oder schwer ermittelbarer Kreditwürdigkeit und Personen, die nur eine kurzfristige Nutzung des Mobilfunksystems anstreben, eignet sich das Abrechnungsverfahren daher nur sehr bedingt, so. dass eine Vielzahl von potentiellen Kunden bei diesem Abrechnungsverfahren nicht berücksichtigt werden kann.

Weiterhin ist ein Abrechnungsverfahren bekannt, bei dem der Kunde im voraus bezahlt und anschließend solange Telefongespräche führen kann, bis der bezahlte Betrag aufgebraucht ist. Bei diesem Verfahren erzeugt sich der Kunde bei einer Telefongesellschaft oder einem Diensteanbieter ein Guthaben, indem er eine geheime Ziffernfolge an die Telefongesellschaft bzw. den Diensteanbieter übermittelt. Es wird geprüft, ob in der Datenbank der Telefongesellschaft bzw. des Diensteanbieters Daten gespeichert sind, die der übermittelten Ziffernfolge entsprechen. Falls dies der Fall ist, wird dasgewünschte Guthaben erzeugt. Die geheime Ziffernfolge kann der Kunde an einer Verkaufsstelle durch Entrichtung des Gegenwerts des zu erzeugenden Guthabens erwerben. Zu beachten ist bei einem derartigen Verfahren, dass für die Erzeugung des Guthabens allein die Kenntnis der Ziffernfolge ausreicht und darüber hinaus keine weitere Identifikation erforderlich ist. Es ist daher unbedingt zu vermeiden, dass ein unberechtigter Dritter Kenntnis von der Ziffernfolge erlangt und sich somit in betrügerischer Weise ein Guthaben bei der Telefongesellschaft oder beim Diensteanbieter erzeugen kann. Besonders wichtig ist in diesem Zusammenhang, unbefugte Zügriffe auf die Datenbank auszuschließen, da dort die Daten über sämtliche sich im Umlauf befindenden Ziffernfolgen abgelegt sind.

Bei dem in der Druckschrift EP 0 671 712 A1 offenbarten Datenträger sind zu dessen Authentifizierung durch einen Diensteanbieter eine Information I zur Definition von Zugangsrechten, eine Seriennummer Ns sowie ein Authentifizierungscode VA vorgesehen. Der Authentifizierungscode VA wird hierbei aus der Information I und der Seriennummer Ns mittels bekannter kryptografischer Verfahren erzeugt. Zur Authentifizierung werden die Information I, die Seriennummer Ns sowie der Authentifizierungscode VA an den Diensteanbieter übermittelt, welcher überprüft, ob der Authentifizierungscode VA mit der Seriennummer Ns und der Information I kompatibel ist.

Aus der Druckschrift UK 2 252 270 A ist eine mit einer lesbaren sowie einer geheimen Zeichenfolge versehene Kredit- oder Telefonkarte bekannt. Die geheime Zeichenfolge ist derart gespeichert, daß bei einem Zugriff auf diese eine irreversible Veränderung an der Karte vorgenommen werden muß. Zur Authentifizierung werden beide Zeichenfolgen einem Computer zugeführt, welcher überprüft, ob eine vordefinierte, z. B. arithmetische, Beziehung zwischen beiden Zeichenfolgen vorliegt. Die vordefinierte Beziehung ist hierbei if einem für den Computer zugänglichen Speicher abgelegt.

Bei diesen Authentifizierungsverfahren nach dem Stand der Technik wird neben einer geheimen Zeichenfolge zusätzlich eine auf dem Datenträger vorhandene lesbare Information herangezogen und deren Kompatibilität mit bzw. deren Beziehung zu der geheimen Zeichenfolge geprüft.

Falls eine nicht berechtigte Person jedoch Kenntnis über die kryptografische Verschlüsselung bzw. die vordefinierte Beziehung erlangt, kann sie nicht nur unberechtigt auf den Diensteanbieter zugreifen, sondern auch durch gezielte Veränderung der lesbaren Information und der dort im allgemeinen enthaltenen Daten zu Zugangsrechten oder Guthaben auf Dienste oder Kredite zugreifen, die ursprünglich nicht für den Datenträger vorgesehen waren.

Es ist daher Aufgabe der Erfindung, ein Abrechnungsverfahren, einem Wertgutschein und ein System zur Erzeugung eines Guthabens anzugeben, die eine Vorausbezahlung ermöglichen und dennoch einen möglichst hohen Sicherheitsstandard bieten.

Diese Aufgabe wird durch die kennzeichnenden Merkmale der Ansprüche 1, 10 und 19 gelöst.

Der Grundgedanke der Erfindung besteht darin, einen für die Erzeugung eines Guthabens bei einem Diensteanbieter benötigten geheimen Zugangscode ausschließlich auf einen vorausbezahlten Wertgutschein zu speichern, d.h. der geheime Zugangscode wird nicht zusätzlich in einer Datenbank beim Diensteanbieter gespeichert. Der geheime Zugangscode wird vom Herausgeber der vorausbezahlten Wertgutscheine aus einem Datensatz und einer diesem Datensatz zugeordneten Zahl, vorzugsweise einer Zufallszahl, erzeugt Für die Erzeugung des geheimen Zugangscodes werden jeweils für sich bekannte kryptographische Verfahren eingesetzt. Der geheime Zugangscode wird zusammen mit der Zufallszahl als eine Zeichenfolge auf dem vorausbezahlten Wertgutschein gespeichert und durch eine entfernbare Abdeckschicht oder andere geeignete Maßnahmen gegen unbefugten Zugriff gesichert. Unmittelbar nach der Speicherung auf dem vorausbezahlten Wertgutschein wird der geheime Zugangscode vernichtet. Die Zufallszahl und der Datensatz werden dem Diensteanbieter übermittelt und von diesem so in einer Datenbank abgelegt, dass über die Zufallszahl auf den zugehörigen Datensatz zugegriffen werden kann.

Die mit diesem Verfahren hergestellten vorausbezahlten Wertgutscheine werden an Verkaufsstellen ausgeliefert und dort an die Kunden veräußert. Zur Erzeugung eines Guthabens bei einem Diensteanbieter übermittelt der Kunde die auf dem vorausbezahlten Wertgutschein gespeicherte geheime Zeichenfolge an den Diensteanbieter. Der Diensteanbieter entnimmt der übermittelten Zeichenfolge die darin enthaltene Zufallszahl und den darin enthaltenen Zugangscode. Aus der Datenbank des Diensteanbieters wird der der Zufallszahl zugeordnete Datensatz ermittelt und zusammen mit dem Zugangscode und der Zufallszahl einer Prüfeinrichtung zugeführt. Die Prüfeinrichtung prüft mittels jeweils für sich bekannter kryptographischer Verfahren den Zugangscode und veranlasst entsprechend dem Ergebnis der Prüfung die Erzeugung des gewünschten Guthabens bzw. verweigert diese. Nach erfolgreicher Erzeugung des Guthabens kann der Kunde die Dienste des Diensteanbieters so lange in Anspruch nehmen, bis das Guthaben verbraucht ist. Der Kunde kann sich dann einen neuen, vorausbezahlten Wertgutschein kaufen und sich wiederum ein Guthaben erzeugen.

Ein Vorteil des erfindungsgemäßen Verfahrens besteht darin, dass der Zugangscode lediglich auf dem vorausbezahlten Wertgutschein und nirgends sonst gespeichert ist. Dies verringert das Risiko, dass der Zugangscode ausgespäht wird. Insbesondere wird die Gefahr eines Systemangriffs über einen unberechtigten Zugriff auf die Datenbank des Diensteanbieters wesentlich verringert.

Eine weitere Verringerung des Risikos wird erreicht, indem für die Prüfeinrichtung eine obere Grenze für die Anzahl der Prüfvorgänge pro Zeiteinheit vorgegeben wird. Wenn nun ein nichtberechtigter Benutzer in Besitz der Prüfvorrichtung gelangt und versucht alle möglichen Zugangscodes auszuprobieren, ist die Anzahl der Versuche pro Zeiteinheit durch die Vorgabe begrenzt. Eine derartige Begrenzung verringert die Wahrscheinlichkeit, dass der richtige Zugangscode für eine bestimmte, zugeordnete Zufallszahl gefunden wird, so dass selbst bei einem Diebstahl der Prüfeinrichtung der Schaden in einem eng begrenzten Rahmen bleibt.

Ein weiterer Vorteil besteht in der einfachen Handhabung und der hohen Flexibilität der Erfindung. So muß der Kunde lediglich einen voraus bezahlten Wertgutschein kaufen und anschließend die darauf gespeicherte geheime Zeichenfolge durchgeben, um sofort danach die Dienste des Diensteanbieters nutzen zu können. Ein solcher Dienst kann beispielsweise ein Mobilfunksystem sein. Der Kunde muß keinerlei Antragsformular ausfüllen, er muß weder seine Adresse noch seine Bankverbindung angeben und er muß mit der Inanspruchnahme des gewünschten Dienstes auch nicht warten, bis ein Antrag bearbeitet ist und anschließend eine entsprechende Installation vorgenommen wurde. Dabei ist es insbesondere vorteilhaft, dass der vorausbezahlte Wertgutschein nicht bereits a priori mit Systemkomponenten des Dienstes, beispielsweise einer SIM-Karte bei einem Mobilfunksystem, verkoppelt ist. Die Verbindung zu einem speziellen Dienst entsteht erst mit der Einlösung des vorausbezahlten Wertgutscheins, d.h. durch das Übermitteln der darauf gespeicherten geheimen Zeichenfolge. Es muß also nicht bereits beim Kauf des vorausbezahlten Wertgutscheins entschieden werden, welcher Dienst konkret in Anspruch genommen werden soll. Der vorausbezahlte Wertgutschein ist somit sehr flexibel einsetzbar. Voraussetzung ist lediglich, dass der gewünschte Dienst überhaupt mit dem vorausbezahlten Wertgutschein bezahlt werden kann.

Die Erfindung wird nachstehend anhand der in den Figuren dargestellten Ausführungsformen erläutert. Es zeigen:
- Fig. 1, 2, 3 und 4: verschiedene Ausführungsformen eines vorausbezahlten Wertgutscheins in Aufsicht,
- Fig. 5: ein Blockschaltbild für die Bereitstellung der für das erfindungsgemäße Verfahren benötigten Daten,
- Fig. 6: ein Blockschaltbild für die Erzeugung eines Guthabens mittels des vorausbezahlten Wertgutscheins.

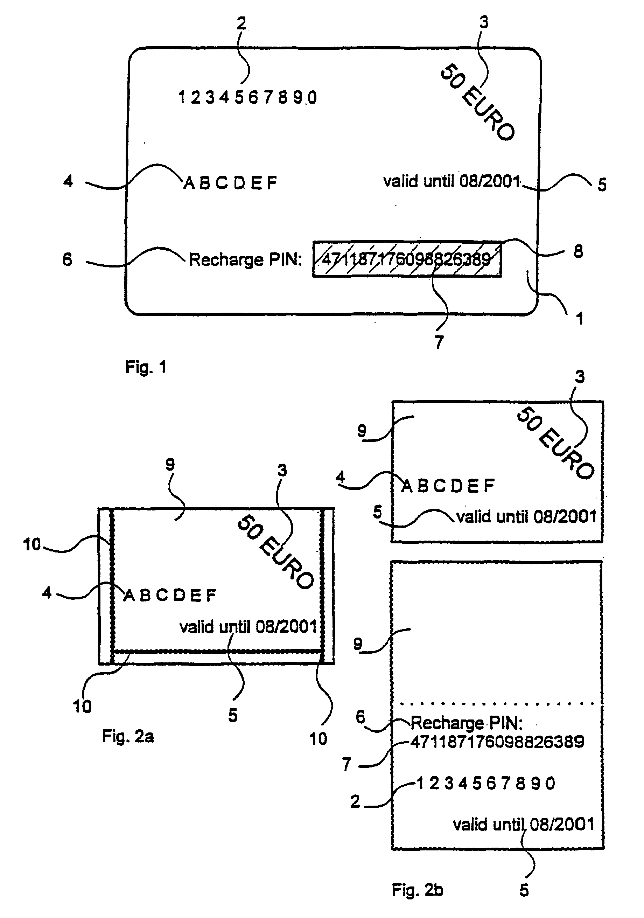

Fig. 1 zeigt eine Ausführungsform eines vorausbezahlten Wertgutscheins in Aufsicht. Der vorausbezahlte Wertgutschein ist in Form einer Karte 1 ausgeführt, die vorzugsweise genormte Abmessungen aufweist, wie beispielsweise eine übliche Scheck-, Kredit- oder Telefonkarte. Das Kartenmaterial wird in der Regel Kunststoff oder auch Papier oder Pappe sein. Wird als Kartenmaterial Kunststoff verwendet, so kann die Karte 1 im Spritzgussverfahren, durch Ausstanzen oder Ausschneiden aus einer Folie oder durch Laminieren mehrerer Folien usw. hergestellt werden. Auf. der Karte 1 sind eine Reihe von Datenfeldern aufgedruckt, aufgelasert oder mittels anderer geeigneter Verfahren aufgebracht. Ein Datenfeld 2 stellt eine Seriennummer dar, die vorzugsweise jeweils nur einmal vergeben wird. Weiterhin enthält die Karte 1 ein Datenfeld 3, das den Wert der Karte 1 angibt, ein Datenfeld 4 mit Angaben über den Diensteanbieter, bei dem diese Karte 1 verwendet werden kann, sowie ein Datenfeld 5 mit dem Verfallsdatum. Schließlich weist die Karte 1 noch ein Datenfeld 6 mit einem Hinweis auf eine verdeckt auf der Karte 1 angebrachte geheime Zeichenfolge auf sowie ein Datenfeld 7, das diese geheime Zeichenfolge darstellt. Die geheime Zeichenfolge kann beliebige alphanumerische Zeichen enthalten oder als reine Ziffernfolge ausgebildet sein. Da die Zeichenfolge bis zu ihrer Verwendung geheimzuhalten ist, wird sie durch eine Abdeckung 8 abgedeckt und ist nur nach Entfernen der Abdeckung 8 lesbar. Die Abdeckung 8 wird entweder unmittelbar nach dem Aufbringen der geheimen Zeichenfolge angebracht oder sie wird bereits zuvor angebracht und die geheime Zeichenfolge wird durch die Abdeckung hindurch auf der Karte 1 gespeichert. Dies lässt sich beispielsweise dadurch realisieren, dass die geheime Zeichenfolge durch die Abdeckung 8 hindurch mittels eines Laserstrahls in die Karte 1 eingeschrieben wird, wobei der Laserstrahl und das Material der Abdeckung 8 so aufeinander abgestimmt sind, dass beim Einschreiben in der Abdeckung 8 keine verwertbare Materialveränderung stattfindet. Weiterhin ist es auch möglich, die geheime Zeichenfolge durch die Abdeckung 8 hindurch drucktechnisch aufzubringen, beispielsweise durch Bestückung der Karte 1 oder der Innenseite der Abdekkung 8 mit Mikrokapseln, die eine Druckfarbe enthalten und beim Druckvorgang mechanisch zerstört werden und somit die Druckfarbe freisetzen.

Die Abdeckung 8 ist so auszuführen, dass ihre Entfernung zu einer irreversiblen und leicht erkennbaren Zerstörung führt, so dass ein Manipulationsversuch leicht entdeckt werden kann. Die Abdeckung 8 kann beispielsweise als eine Rubbelfolie ausgeführt werden, die bei Verwendung der Karte 1 mit dem Finger oder einem geeigneten Gegenstand abgerubbelt wird. Ebenso ist es auch möglich, als Abdeckung 8 ein Siegel aus Papier oder Kunststoff aufzubringen, das bei Verwendung der Karte 1 gebrochen werden muss.

Fig. 2 zeigt eine weitere Ausführungsform des vorausbezahlten Wertgutscheins, die aus einem zusammengefalteten Papier- oder Kunststoffstreifen besteht.

In Fig. 2a ist der Streifen 9 im zusammengefalteten Zustand dargestellt. Der Streifen 9 ist auf der einen Seite so bedruckt oder beschichtet, dass er undurchsichtig ist. Die andere Seite des Streifens 9 steht für den Datenaufdruck zur Verfügung. Um ihn in die in Fig. 2a dargestellte Form zu bringen, wurde der Streifen 9 zweimal gefaltet, so dass drei gleich große, übereinanderliegende Teilblätter entstehen. Die Richtung der Faltungen sind vorzugsweise so gewählt, dass der Streifen 9 von der Seite betrachtet die Form des Buchstabens "Z" hat. Die drei Teilblätter sind im Randbereich jeweils miteinander verklebt. Weiterhin ist der Streifen 9 etwas innerhalb der Klebebereiche mit parallel zu den Rändern verlaufenden Perforationen 10 versehen. Im gezeigten Ausführungsbeispiel sind drei Seiten mit Perforationen versehen. Auf die nicht durchgehend bedruckte bzw. beschichtete Außenseite der durch die Verklebung entstandenen Hülle sind in der Regel das Datenfeld 3 für die Wertangabe, das Datenfeld 5 für das Verfallsdatum sowie das Datenfeld 4 für die Angaben über den Diensteanbieter aufgedruckt oder mittels eines anderen geeigneten Verfahrens aufgebracht. Zudem kann diese Fläche als Werbefläche genutzt werden. Das Datenfeld 7 für die geheime Zeichenfolge und in der Regel auch das Datenfeld 2 für die Seriennummer sind von außen nicht sichtbar auf der Innenseite des Streifens 9 aufgebracht. Weiterhin kann die Innenseite des Streifens 9 auch noch eine Gebrauchsanweisung enthalten.

Das Aufbringen des Datenfeldes 7 erfolgt entweder unmittelbar vor dem Zusammenfalten des Streifens 9 oder erst nach dem Zusammenfalten bzw. Verkleben. Zur Realisierung der beiden letzt genannten Fälle können im Bereich des Datenfeldes 7 mit Druckfarbe aufgefüllte Mikrokapseln aufgebracht sein, die unter Druckeinwirkung lokal zerstört werden. Die hier beschriebenen Maßnahmen zur Sicherung des Datenfeldes 7 können auch bei den unten stehenden Abwandlungen eingesetzt werden.

Um sich Zugang zur geheimen Ziffernfolge zu verschaffen, ist es erforderlich, die Ränder des Streifens 9 entlang der Perforationen 10 abzutrennen und dann den Streifen 9 aufzuklappen.

Fig. 2b zeigt den Streifen 9 im aufgeklappten Zustand nach Abtrennen der Ränder. Das Teilblatt des Streifens 9, das die von außen sichtbaren Datenfelder 3, 4 und 5 trägt, wird infolge der speziellen Faltung des Streifens 9 beim Abtrennen der Ränder entfernt und ist in Fig. 2b oberhalb der beiden anderen Teilblätter dargestellt, die noch miteinander verbunden sind. Auf der Innenseite dieser beiden Teilblätter des Streifens 9 sind die Datenfelder 2 für die Seriennummer, 5 für das Verfallsdatum, 6 für den Hinweis auf die geheime Zeichenfolge und 7 für die geheime Zeichenfolge selbst aufgebracht. Dabei ist es nicht erforderlich, das Datenfeld 7 für die geheime Zeichenfolge mit einer Abdeckung 8 zu versehen, da das Datenfeld 7 bereits durch das Zusammenfalten des Streifens 9 verdeckt wird.

Zu der in Fig. 2 dargestellten Ausführungsform des vorausbezahlten Wertgutscheins sind eine Reihe von Abwandlungen möglich.

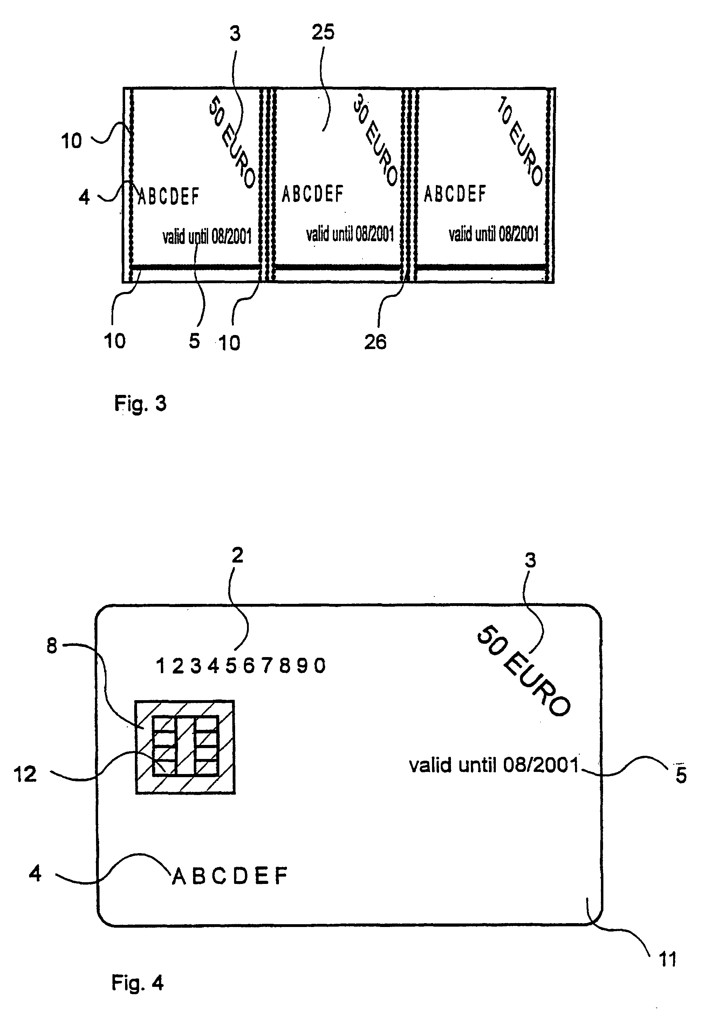

So wird in der Ausführungsform gemäß Fig. 3 beispielsweise statt eines Streifens 9 ein ganzer Bogen 25 verwendet. In Fig. 3 ist der Bogen 25, entsprechend der Darstellung des Streifens 9 in Fig. 2a, in zusammengefaltetem Zustand dargestellt. Im bevorzugten Ausführungsbeispiel wird ein Bogen der Größe DIN A4 verwendet, der durch Perforationen 26 und entsprechende Verklebungen parallel zu seiner Längsseite in drei vorausbezahlte Wertgutscheine aufgeteilt ist. Die Perforationen 26 sind jeweils im Bereich der Verklebungen angeordnet, damit der jeweilige Wertgutschein nach dem Heraustrennen aus dem Bogen 25 noch verschlossen ist. Weiterhin weist jeder einzelne vorausbezahlte Wertgutschein des Bogens 25 die bereits in Fig. 2a dargestellten Perforationen 10 zum Öffnen des vorausbezahlten Wertgutscheins auf. Die Faltung des Bogens 25 entspricht in der Regel der Faltung des in Fig. 2 dargestellten Streifens 9. Bei Bedarf kann aus dem Bogen 25 ein einzelner vorausbezahlter Wertgutschein entlang der Perforation 26 herausgetrennt werden und zu einem beliebigen Zeitpunkt danach mit Hilfe der Perforation 10 geöffnet werden. Um eine hohe Flexibilität zu erreichen, weisen die einzelnen vorausbezahlten Wertgutscheine eines Bogens vorzugsweise unterschiedliche Wertangaben auf.

Eine weitere Abwandlung des in Fig. 2 dargestellten vorausbezahlten Wertgutscheins besteht darin, dass die Daten nicht auf die Innenseite des zusammengefalteten Streifens oder Bogens aufgedruckt werden, sondern auf einen separaten Streifen, der kleiner ist und der vor dem Verkleben in den einmal zusammengefalteten Streifen oder Bogen eingeschoben wird. Im Falle eines Bogens ist eine Vielzahl von Streifen einzufügen, für jeden vorausbezahlten Wertgutschein einer. Dabei kann es produktionstechnisch günstig sein, den Bogen sequentiell zu verkleben und nach jeder Verklebung den oder die Streifen einzufügen, die mit der nächsten Verklebung in den Bogen eingeschlossen werden.

Fig. 4 zeigt ein weiteres Ausführungsbeispiel des vorausbezahlten Wertgutscheins. Bei diesem Ausführungsbeispiel ist der vorausbezahlte Wertgutschein als Chipkarte 11 ausgeführt. Auf dem Kartenkörper der Chipkarte 11 sind die Datenfelder 3 für die Wertangabe, 4 für die Information über den Diensteanbieter und 5 für das Verfallsdatum aufgebracht. Optional kann auch noch das Datenfeld 2 für die Seriennummer auf den Kartenkörper der Chipkarte 11 aufgebracht sein. In den Kartenkörper ist ein Chip 12 eingesetzt, in dem die geheime Zeichenfolge und optional auch die Seriennummer gespeichert sind. Die im Chip 12 gespeicherte geheime Zeichenfolge kann beispielsweise dadurch gegen vorzeitiges Ausspähen gesichert werden, dass man das Kontaktfeld des Chips 12 mit einem geeigneten Material abdeckt. Hierfür kommt wiederum eine Rubbelfolie in Betracht, die sowohl aus isolierendem Material als auch aus elektrisch leitfähigem Material bestehen kann oder auch ein Siegel aus Papier, Kunststoff oder anderen Materialien sein kann. Für das Auslesen der geheimen Zeichenfolge ist es erforderlich, das Kontaktfeld des Chips 12 zu kontaktieren. Wenn man die Abdeckung 8 vor der Kontaktierung nicht entfernt, so ist die Kontaktierung entweder nicht möglich oder die Abdeckung 8 wird jedenfalls bei der Kontaktierung erkennbar beschädigt.

In einer Abwandlung wird auf eine Abdeckung des Kontaktfeldes des Chips 12 verzichtet oder es wird eine Chipkarte 11 mit einer nichtberührenden Kopplung verwendet, bei der eine Abdeckung des Kontaktfeldes gar nicht möglich ist, weil ein solches Kontaktfeld nicht vorhanden ist. Bei dieser Abwandlung ist es aber dennoch möglich, ein Auslesen der geheimen Zeichenfolge aus dem Chip 12 anzuzeigen. Dies kann beispielsweise dadurch erreicht werden, dass der Chip 12 nach dem Auslesen der geheimen Zeichenfolge sich selbst zerstört oder die geheime Zeichenfolge nach dem Auslesen löscht. Weiterhin ist es auch möglich, dass der Chip 12 nach dem Auslesen der geheimen Zeichenfolge eine nicht mehr veränderbare Information in seinen Speicher einschreibt bzw. eine vorher vorhandene Information unwiederbringlich löscht. In diesem Fall kann durch Prüfen der Information mittels eines geeigneten Lesegeräts ermittelt werden, ob die geheime Zeichenfolge bereits ausgelesen wurde. Das Lesegerät kann beispielsweise beim Verkauf der Chipkarte 11 eingesetzt werden, so dass sich der Kunde überzeugen kann, dass die geheime Zeichenfolge bislang noch nicht ausgelesen wurde.

In einer weiteren Ausführungsform ist der vorausbezahlte Wertgutschein nicht an einen materiellen Träger gekoppelt, sondern an einen virtuellen Träger, d.h. der vorausbezahlte Wertgutschein liegt als eine elektronische Information vor, die beispielsweise über ein Telefonnetz, ein Mobilfunknetz, über Internet oder beliebige andere Kommunikationsnetze an den Kunden übermittelt wird. Der Kunde kann bei diesen Ausführungsformen die geheime Zeichenfolge in das Mobiltelefon eintippen oder über Sprache eingeben, gegebenenfalls in Kombination mit einer Spracherkennung. Alternativ kann die. geheime Zeichenfolge über eine drahtgebundene Schnittstelle oder über die Luftschnittstelle des Mobiltelefons eingegeben werden.

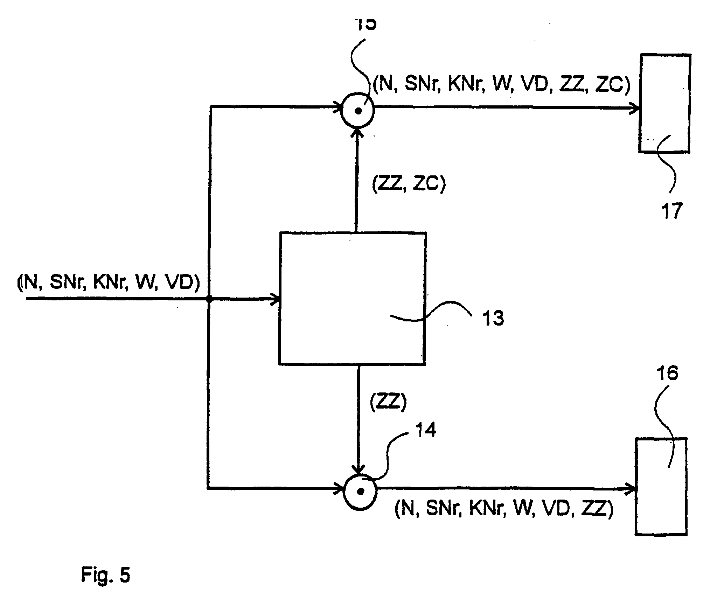

Fig. 5 zeigt ein Blockschaltbild für die Bereitstellung der für das erfindungsgemäße Verfahren benötigten Daten. Als Eingangsdaten werden benötigt: der Name N des Diensteanbieters, die Seriennummer SNr des vorausbezahlten Wertgutscheins, eine Schlüsselnummer KNr, mit der ein für die Generierung des Zugangscodes benötigter Schlüssel ausgewählt wird, der Wert W des vorausbezahlten Wertgutscheins und das Verfallsdatum VD. Der genannte Datensatz wird sowohl einer Generierungseinrichtung 13 als auch zwei Verknüpfungspunkten 14 und 15 zugeführt. Die Generierungseinrichtung 13 ist durch geeignete Maßnahmen gegen äußere Zugriffe geschützt, so dass eine Manipulation dieser Einrichtung oder ein Ausforschen der darin gespeicherten Schlüssel nicht möglich ist. Die Generierungseinrichtung 13 erzeugt eine Zufallszahl ZZ, die im Gültigkeitszeitraum des vorausbezahlten Wertgutscheins nur einmal vorkommt, und aus dieser Zufallszahl ZZ und dem eingegebenen Datensatz (N, SNr, KNr, W, VD) einen Zugangscode ZC. Zur Erzeugung des Zugangscodes ZC wird der durch die eingelesene Schlüsselnummer KNr festgelegte Schlüssel ausgewählt und mittels für sich bekannter kryptographischer Verfahren zusammen mit der Zufallszahl ZZ und dem eingelesenen Datensatz (N, SNr, KNr, W, VD) verarbeitet. Aus Sicherheitsgründen sollte der Zugangscode möglichst lang sein. Eine Länge von weniger als 20 Bit wird in der Regel nicht ausreichen. Die Zufallszahl ZZ wird von.der Generierungseinrichtung 13 an den Verknüpfungspunkt 14 weitergeleitet, wo sie mit dem Datensatz (N, SNr, KNr, W, VD) verknüpft wird und zusammen mit diesem an eine Datenbank 16 weitergeleitet wird. In der Datenbank 16 wird der Datensatz (N, SNr, KNr, W, VD) so gespeichert, dass über die Zufallszahl ZZ auf ihn zugegriffen werden kann. An den Verknüpfungspunkt 15 gibt die Generierungseinrichtung 13 die Zufallszahl ZZ und den Zugangscode ZC aus. Im Verknüpfungspunkt 15 werden die Zufallszahl ZZ und der Zugangscode ZC an den Datensatz (N, SNr, KNr, W, VD) angehängt und der so erweiterte Datensatz wird auf dem vorausbezahlten Wertgutschein 17 gespeichert. Der Zugangscode ZC und die Zufallszahl ZZ werden zusammengefaßt und als eine geheime Zeichenfolge auf dem vorausbezahlten Wertgutschein gespeichert, wobei je nach Ausführungsform des Wertgutscheins unterschiedliche Sicherheitsvorkehrungen gegen ein Ausspähen der geheimen Zeichenfolge vorgesehen werden. Dabei wird sichergestellt, dass der Zugangscode ZC unmittelbar nach der Speicherung auf dem vorausbezahlten Wertgutschein 17 vernichtet wird, damit kein Missbrauch getrieben werden kann.

Der derart mit Daten versehene vorausbezahlte Wertgutschein kann nun ausgeliefert und an einen Kunden verkauft werden.

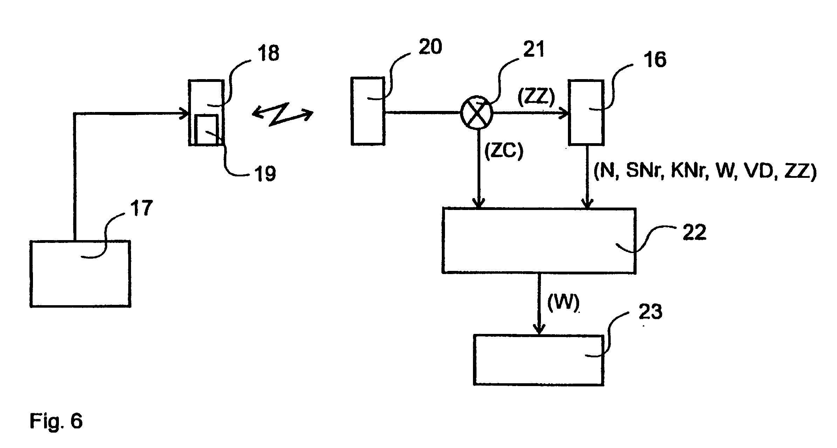

In Fig. 6 ist am Beispiel eines Mobilfunksystems dargestellt, wie mittels des vorausbezahlten Wertgutscheins 17 ein Guthaben erzeugt werden kann. Der Kunde, der den vorausbezahlten Wertgutschein 17 erworben hat, wählt mit seinem Mobiltelefon 18, das mit einer Sicherheitschipkarte (SIM) 19 ausgestattet ist, die für das Aufbuchen vorgesehene Nummer des Diensteanbieters bzw. der dafür zuständigen Gesellschaft. Je nach Ausführungsform des vorausbezahlten Wertgutscheins 17 entfernt der Kunde anschließend die Abdeckung 8, die das Datenfeld 7 mit der geheimen Zeichenfolge verdeckt oder öffnet den vorausbezahlten Wertgutschein gemäß Fig. 2 bzw. 3 durch Abreißen der Perforation 10 und tippt die Zeichenfolge in das Mobilfunkgerät ein bzw. führt den als Chipkarte 11 ausgeführten Wertgutschein 17 in eine dafür vorgesehene Öffnung des Mobilfunkgeräts 18 ein oder bringt die Chipkarte 11 mit kontaktloser Kopplung in die Nähe des Mobilfunkgeräts 18, um die im Chip 12 der Chipkarte 11 gespeicherte geheime Zeichenfolge auszulesen. Die geheime Zeichenfolge kann auch als Sprachinformation in das Mobilfunkgerät 18 eingegeben werden. In jedem Fall wird die geheime Zeichenfolge anschließend an eine Sende-/ Empfangsstation 20 des Diensteanbieters bzw. der zuständigen Gesellschaft übermittelt. In einer Abwandlung wird die geheime Zeichenfolge per e-mail an den Diensteanbieter bzw. die zuständige Gesellschaft übermittelt. Die Sende-/ Empfangsstation 20 leitet die empfangene Zeichenfolge an einen Verzweigungspunkt 21 weiter, in dem die Zeichenfolge in die Zufallszahl ZZ und den Zugangscode ZC aufgetrennt wird. Die Zufallszahl ZZ wird an die Datenbank 16 weitergeleitet und dort wird der zur Zufallszahl ZZ gehörende Datensatz (N, SNr, KNr, W, VD) zusammen mit der Zufallszahl ZZ an eine Prüfeinrichtung 22 weitergeleitet. Weiterhin wird der Prüfeinrichtung 22 vom Verzweigungspunkt 21 der Zu-gangscode ZC übermittelt. Die Prüfeinrichtung 22 verarbeitet die genannten Eingabedaten und prüft dabei, ob der Zugangscode ZC echt ist. Diese Prüfung kann beispielsweise so erfolgen, dass aus den Eingangsdaten N, SNr, KNr, W, VD und ZZ in ähnlicher Weise wie mit der Generierungseinrichtung 13 ein Referenzwert für den Zugangscode ZC ermittelt wird und dieser Referenzwert mit dem eingegebenen Zugangscode ZC verglichen wird. Alternativ dazu kann die Prüfeinrichtung 22 durch geeignete Algorithmen feststellen, ob der eingegebene Zugangscode ZC zu den eingegebenen Daten N, SNr, KNr, W, VD und ZZ kompatibel ist. Stellt die Prüfeinrichtung 22 fest, dass der eingegebene Zugangscode ZC echt ist, so veranlasst sie einen Kontenspeicher 23 dazu, ein Konto, das der Kennung der bei der Datenübermittlung verwendeten Sicherheitschipkarte 19 zugeordnet ist, zu erzeugen bzw. auszuwählen und diesem Konto den Wert W des vorausbezahlten Wertgutscheins 17 gutzuschreiben. Wird ein falscher Zugangscode ZC festgestellt, so gibt die Prüfeinrichtung 22 eine Fehlermeldung aus. Die Prüfeinrichtung 22 ist ähnlich wie die Generierungseinrichtung 13 gegen äußere Zugriffe geschützt.

In einer Variante der Erfindung arbeiten sowohl die Generierungseinrichtung 13 als auch die Prüfeinrichtung 22 jeweils nur mit einer Teilmenge der oben angegebenen Datensätze. Ebenso können auch andere oder zusätzliche Daten verwendet werden.

Die Prüfeinrichtung 22 kann außerdem mit einer Überwachungseinrichtung ausgestattet sein, die lediglich eine bestimmte Anzahl von Prüfungen pro Zeiteinheit zuläßt. Damit wird bei einem Diebstahl der Prüfeinrichtung 22 verhindert, dass durch ein Ausprobieren aller Möglichkeiten innerhalb kurzer Zeit der einer ausgewählten Zufallszahl zugeordnete Zugangscode ermittelt werden und somit Mißbrauch entstehen kann.

Da erfahrungsgemäß innerhalb eines bestimmten Zeitraumes, z.B. eines Tages oder einer Woche, eine unterschiedliche Abfragehäufigkeit zu erwarten ist, kann die Maximalanzahl der Prüfvorgänge variabel gestaltet sein, d.h. zu Spitzenzeiten kann die Grenze erhöht werden, während zu Zeiten, in denen nicht viele Abfragen zu erwarten sind, die Maximalanzahl der erlaubten Prüfvorgänge verringert wird. Um dem Diensteanbieter im Bedarfsfall ein Eingreifen zu ermöglichen, kann er als autorisierter Benutzer eine Änderung der vorgegebenen Anzahl von Prüfungen manuell vornehmen. Der Zugriff kann dabei über eine einzugebende PIN oder andere bekannte Sicherheitsmechanismen erfolgen, so dass auch hier ein unerlaubter Zugriff mit hoher Sicherheit ausgeschlossen ist.

Die Erfindung kann beispielsweise bei Mobilfunksystemen eingesetzt werden, um ein Guthaben für zukünftig zu führende Telefongespräche bereitzustellen. Ebenso kann die Erfindung zur Bezahlung von Diensten in beliebigen Netzwerken, z.B. in Telefonnetzen, im Internet usw. eingesetzt werden.

## Patentansprüche

1. Verfahren zur Erzeugung eines Guthabens mittels eines vorausbezahlten Wertgutscheins, bei dem eine auf dem vorausbezahlten Wertgutschein gespeicherte geheime Zeichenfolge einen Diensteanbieter, bei dem das Guthaben erzeugt werden soll, übermittelt wird, wobei
- die geheime Zeichenfolge ausschließlich auf dem Wertgutschein gespeichert ist und nicht mit Daten übereinstimmt, die beim Diensteanbieter gespeichert sind,
- der Diensteanbieter die empfangene geheime Zeichenfolge einer Prüf-einrichtung zuführt,
- die Prüfeinrichtung die geheime Zeichenfolge prüft und
- abhängig vom Ergebnis der Prüfung das Guthaben erzeugt wird oder nicht erzeugt wird,
**dadurch gekennzeichnet, dass**
- aus der übermittelten Zeichenfolge eine erste Teilmenge ausgewählt wird,
- mit Hilfe der ersten Teilmenge ein vorab beim Diensteanbieter gespeicherter Datensatz ermittelt wird,
- aus der übermittelten Zeichenfolge eine zweite Teilmenge ausgewählt wird, die ausschließlich auf dem Wertgutschein gespeichert ist und keine Übereinstimmung mit Daten aufweist, die beim Diensteanbieter gespeichert sind, und
- die erste Teilmenge und die zweite Teilmenge der übermittelten Zeichenfolge sowie wenigstens ein Teil des vorab gespeicherten Daten-satzes der Prüfeinrichtung zugeführt werden.

2. Verfahren nach Anspruch 1, **dadurch gekennzeichnet, dass** zur Übermittlung der Zeichenfolge an den Diensteanbieter zwangsweise eine ermittelbare Veränderung am Wertgutschein vorgenommen werden muss oder vorgenommen wird.

3. Verfahren nach einem der vorhergehenden Ansprüche, **dadurch gekennzeichnet, dass** durch die Prüfeinrichtung nur eine vorgegebene Maximalanzahl von Prüfvorgängen pro Zeiteinheit durchgeführt wird.

4. Verfahren nach Anspruch 3, **dadurch gekennzeichnet, dass** die Maximalanzahl der Prüfvorgänge pro Zeiteinheit durch einen autorisierten Benutzer oder in Abhängigkeit von vorgegebenen äußeren Faktoren vorgegeben wird.

5. Verfähren nach einem der vorhergehenden Ansprüche, **dadurch gekennzeichnet, dass** die erste Teilmenge eine Zufallszahl darstellt, die im Gültigkeitszeitraum des vorausbezahlten Wertgutscheins nur einmal vorkommt.

6. Verfahren nach einem der vorhergehenden Ansprüche, **dadurch gekennzeichnet, dass** die zweite Teilmenge einen Zugangscode darstellt, der mittels kryptographischer Verfahren aus der ersten Teilmenge und aus wenigstens einem Teil des vorab gespeicherten Datensatzes erzeugt ist.

7. Verfahren nach einem der vorhergehenden Ansprüche, **dadurch gekennzeichnet, dass** die zweite Teilmenge aus alphanumerischen Zeichen besteht und eine Länge von wenigstens 20 Bit aufweist.

8. Verfahren nach einem der vorhergehenden Ansprüche, **dadurch gekennzeichnet, dass** der vorab gespeicherte Datensatz eine Schlüsselnummer umfasst, mit deren Hilfe ein für die Erzeugung der zweiten Teilmenge benötigter Schlüssel ausgewählt wird.

9. Verfahren nach einem der vorhergehenden Ansprüche, **dadurch gekennzeichnet, dass** bei der Vorabspeicherung des Datensatzes in einer Datenbank des Diensteanbieters sichergestellt wird, dass über die erste Teilmenge auf den Datensatz zugegriffen werden kann.

10. Vorausbezahlter Wertgutschein zur Erzeugung eines Guthabens bei einem Dieristeanbieter,
- wobei auf dem vorausbezahlten Wertgutschein eine geheime Zeichenfolge gespeichert ist und
- die geheime Zeichenfolge zur Erzeugung des Guthabens zwingend erforderlich ist und ausschließlich auf dem vorausbezahlten Wertgutschein und nicht beim Diensteanbieter gespeichert ist,
**dadurch gekennzeichnet, dass**
- die geheime Zeichenfolge auf dem vorausbezahlten Wertgutschein derart gespeichert ist, dass bei einem Zugriff auf die Zeichenfolge zwangsweise eine ermittelbare Veränderung am Wertgutschein vorgenommen werden muss oder vorgenommen wird, und
- die geheime Zeichenfolge eine erste und eine zweite Teilmenge aufweist, wobei mit Hilfe der ersten Teilmenge ein vorab beim Diensteanbieter gespeicherter Datensatz ermittelbar ist und wenigstens ein Teil des Datensatzes zusammen mit der ersten und zweiten Teilmenge einer Prüfeinrichtung zuführbar ist.

11. Vorausbezahlter Wertgutschein nach Anspruch 10, **dadurch gekennzeichnet, dass** der vorausbezahlte Wertgutschein aus einer Papier- oder Kunststoffkarte besteht, auf die die geheime Zeichenfolge aufgebracht und durch eine entfernbare Deckschicht abgedeckt ist.

12. Vorausbezahlter Wertgutschein nach Anspruch 10, **dadurch gekennzeichnet, dass** der vorausbezahlte Wertgutschein aus einer Chipkarte mit berührender oder nichtberührender Kopplung besteht und die geheime Zeichenfolge im Chip der Chipkarte gespeichert ist

13. Vorausbezahlter Wertgutschein nach Anspruch 12, **dadurch gekennzeichnet, dass** der Chip ein Kontaktfeld aufweist, das mit einer entfernbaren Deckschicht abgedeckt sind, und die geheime Zeichenfolge durch elektrische Kontaktierung des Kontaktfeldes auslesbar ist.

14. Vorausbezahlter Wertgutschein nach einem der Ansprüche 12 oder 13, **dadurch gekennzeichnet, dass** der Chip der Chipkarte so ausgeführt ist, dass wenigstens beim ersten Auslesen der geheimen Zeichenfolge zwangsweise eine Information im Chip gespeichert wird, aus der das Auslesen erkennbar ist.

15. Vorausbezahlter Wertgutschein nach Anspruch 10, **dadurch gekennzeichnet, dass** der vorausbezahlte Wertgutschein aus einem Kunststoff- oder Papierstreifen besteht, der zu einem geschlossenen Umschlag zusammengefaltet und verklebt ist und auf dessen Innenseite die geheime Zeichenfolge aufgebracht ist.

16. Vorausbezahlter Wertgutschein nach Anspruch 10, **dadurch gekennzeichnet, dass** der vorausbezahlte Wertgutschein aus einem Kunststoff- oder Papierstreifen besteht, der zu einem geschlossenen Umschlag zusammengefaltet und verklebt ist und der einen weiteren Kunststoff- oder Papierstreifen umhüllt, auf den die geheime Zeichenfolge aufgebracht ist.

17. Vorausbezahlter Wertgutschein nach einem der Ansprüche 15 oder 16, **dadurch gekennzeichnet, dass** mehrere vorausbezahlte Wertgutscheine voneinander trennbar in einem Bogen angeordnet sind.

18. Vorauszbezahlter Wertgutschein nach Anspruch 10, **dadurch gekennzeichnet, dass** der vorausbezahlte Wertgutschein an einen virtuellen Träger gebunden ist.

19. System zur Erzeugung eines Guthabens bei einem Diensteanbieter mit
- einer Generierungseinrichtung (13) die aus Eingangsdaten eine geheime Zeichenfolge ermittelt,
- einem vorausbezahlten Wertgutschein (17), auf dem die geheime Zeichenfolge gespeichert ist, die zur Erzeugung des Guthabens zwingend erforderlich ist und ausschließlich auf dem vorausbezahlten Wertgutschein gespeichert ist, und
- einer Prüfeinrichtung (22), die die zur Erzeugung des Guthabens an den Diensteanbieter übermittelte Zeichenfolge prüft und gegebenenfalls die Erzeugung des Guthabens veranlasst,
**dadurch gekennzeichnet, dass**
- beim Diensteanbieter eine Datenbank (16) vorgesehen ist, in welcher die Eingangsdaten gespeichert werden,
- die geheime Zeichenfolge auf dem vorausbezahlten Wertgutschein derart gespeichert ist, dass bei einem Zugriff auf die Zeichenfolge zwangsweise eine ermittelbare Veränderung am Wertgutschein vorgenommen werden muss oder vorgenommen wird, und
- die geheime Zeichenfolge eine erste und eine zweite Teilmenge aufweist, wobei mit Hilfe der ersten Teilmenge ein vorab in der Datenbank des Diensteanbieters gespeicherter Datensatz ermittelbar ist und wenigstens ein Teil des Datensatzes zusammen mit der ersten und zweiten Teilmenge einer Prüfeinrichtung zuführbar ist.

## Claims

1. A method for generating a credit by means of a prepaid voucher by which a secret character string stored on the prepaid voucher is transmitted to a service provider with which the credit is to be generated,
- the secret character string being stored solely on the voucher and not matching data stored with the service provider,
- the service provider supplying the received secret character string to a test device,
- the test device testing the secret character string, and
- the credit being generated or not generated in accordance with the test result,
**characterized in that**
- a first subset is selected from the transmitted character string,
- the first subset is used to determine a data record prestored with the service provider,
- a second subset is selected from the transmitted character string, said subset being stored solely on the voucher and having no match with data stored with the service provider, and
- the first subset and second subset of the transmitted character string and at least part of the prestored data record are supplied to the test device.

2. A method according to claim 1, **characterized in that** a determinable change on the voucher obligatorily must be performed or is performed for transmitting the character string to the service provider.

3. A method according to either of the above claims, **characterized in that** only a predetermined maximum number of test operations per unit of time is performed by the test device.

4. A method according to claim 3, **characterized in that** the maximum number of test operations per unit of time is predetermined by an authorized user or in accordance with predetermined external factors.

5. A method according to any of the above claims, **characterized in that** the first subset constitutes a random number which occurs only once within the period of validity of the prepaid voucher.

6. A method according to any of the above claims, **characterized in that** the second subset constitutes an access code generated by cryptographic methods from the first subset and from at least part of the prestored data record.

7. A method according to any of the above claims, **characterized in that** the second subset consists of alphanumeric characters and has a length of at least 20 bits.

8. A method according to any of the above claims, **characterized in that** the prestored data record includes a key number which is used to select a key required for generating the second subset.

9. A method according to any of the above claims, **characterized in that** it is ensured upon prestorage of the data record in a data base of the service provider that the data record can be accessed via the first subset.

10. A prepaid voucher for generating a credit with a service provider,
- a secret character string being stored on the prepaid voucher, and
- the secret character string being compulsory for generating the credit and stored solely on the prepaid voucher and not with the service provider,
**characterized in that**
- the secret character string is stored on the prepaid voucher such that when the character string is accessed a determinable change on the voucher obligatorily must be performed or is performed, and
- the secret character string has first and second subsets, the first subset being used to determine a data record prestored with the service provider, and at least part of the data record being suppliable to a test device together with the first and second subsets.

11. A prepaid voucher according to claim 10, **characterized in that** the prepaid voucher consists of a paper or plastic card on which the secret character string is applied and covered by a removable cover layer.

12. A prepaid voucher according to claim 10, **characterized in that** the prepaid voucher consists of a smart card with contact-type or contactless coupling and the secret character string is stored in the chip of the smart card.

13. A prepaid voucher according to claim 12, **characterized in that** the chip has a contact bank covered with a removable cover layer, and the secret character string is readable by electric contacting of the contact bank.

14. A prepaid voucher according to either of claims 12 and 13, **characterized in that** the chip of the smart card is designed such that at least upon the first readout of the secret character string information indicating said readout is obligatorily stored in the chip.

15. A prepaid voucher according to claim 10, **characterized in that** the prepaid voucher consists of a plastic or paper strip folded into a closed envelope and glued and having the secret character string applied to the inside thereof.

16. A prepaid voucher according to claim 10, **characterized in that** the prepaid voucher consists of a plastic or paper strip folded into a closed envelope and glued and encasing another plastic or paper strip having the secret character string applied thereto.

17. A prepaid voucher according to either of claims 15 and 16, **characterized in that** a plurality of prepaid vouchers are disposed in a sheet so as to be separable from one other.

18. A prepaid voucher according to claim 10, **characterized in that** the prepaid voucher is bound to a virtual carrier.

19. A system for generating a credit with a service provider having
- a generation device (13) which determines a secret character string from input data,
- a prepaid voucher (17) on which the secret character string is stored which is compulsory for generating the credit and is stored solely on the prepaid voucher, and
- a test device (22) which tests the character string transmitted to the service provider for generating the credit and optionally induces generation of the credit,
**characterized in that**
- a data base (16) in which the input data are stored is provided with the service provider,
- the secret character string is stored on the prepaid voucher such that when the character string is accessed a determinable change on the voucher obligatorily must be performed or is performed, and
- the secret character string has first and second subsets, the first subset being used to determine a data record prestored in the data base of the service provider, and at least part of the data record being suppliable to a test device together with the first and second subsets.

## Revendications

1. Procédé pour générer un crédit au moyen d'un bon de valeur prépayé, dans lequel une suite de signes secrets enregistrés sur le bon de valeur prépayé est transmis à un prestataire de service, auprès duquel le crédit doit être généré, procédé dans lequel
la série de signes secrets est exclusivement enregistrée sur le bon de valeur et ne correspond pas à des données qui sont enregistrées au niveau du prestataire de service,
le prestataire de service guide la série de signes secrets reçus vers un dispositif de vérification,
le dispositif de vérification vérifie la série de signes secrets et
en fonction du résultat de la vérification, un crédit est généré ou n'est pas généré,
**caractérisé en ce que**
à partir de la série de signes transmis, une première partie d'un ensemble est choisie,
avec l'aide de la première partie de l'ensemble, une série de données enregistrées au préalable au niveau du prestataire de service, est obtenue,
à partir de la série de signes transmise, une deuxième partie d'un ensemble est choisie, qui est exclusivement enregistrée sur le bon de valeur et ne présente pas de correspondance avec des données qui sont enregistrées au niveau du prestataire de service et
la première partie de l'ensemble et la deuxième partie de l'ensemble de la série de signes transmise ainsi qu'au moins une partie de la série de données enregistrée au préalable sont dirigées vers le dispositif de vérification.

2. Procédé selon la revendication une, **caractérisé en ce que**, pour la transmission de la série de signes vers le prestataire de service, obligatoirement une modification déterminante du bon de valeur doit être effectuée ou est effectuée.

3. Procédé selon l'une des revendications précédentes, **caractérisé en ce que**, grâce au dispositif de vérification, seulement un nombre maximal donné de vérifications par unité de temps est effectué,

4. Procédé selon la revendication trois, **caractérisé en ce que** le nombre maximal de vérifications par unité de temps par un utilisateur autorisé ou en fonction d'autres facteurs extérieurs donnés, est fixé à l'avance.

5. Procédé selon l'une quelconque des revendications précédentes, **caractérisé en ce que** la première partie de l'ensemble représente un nombre au hasard, qui ne revient qu'une seule fois dans le temps de validité du bon de valeur prépayé.

6. Procédé selon l'une quelconque des revendications précédentes, **caractérisé en ce que** la deuxième partie de l'ensemble représente un code d'accès, qui est généré au moyen d'un procédé cryptographique à partir de la première partie de l'ensemble et à partir d'au moins une partie de la série de données enregistrées à l'avance.

7. Procédé selon l'une quelconque des revendications précédentes, **caractérisé en ce que** la deuxième partie de l'ensemble consiste en des signes alphanumériques et présente une longueur d'au moins 20 bits.

8. Procédé selon l'une quelconque des revendications précédentes, **caractérisé en ce que** la série de données enregistrée à l'avance comprend un numéro clef, avec lequel une clef nécessaire pour la génération de la deuxième partie de l'ensemble, est choisie.

9. Procédé selon l'une quelconque des revendications précédentes, **caractérisé en ce que**, au cours de l'enregistrement à l'avance de la série de données dans une banque de données du prestataire de service, il est vérifié qu'il peut y avoir accès à la série de données par l'intermédiaire de la première partie de l'ensemble.

10. Bon de valeur prépayé pour la génération d'un crédit auprès d'un prestataire de service,
dans lequel une série de signes secrets est enregistrée sur le bon de valeur prépayé et
la série de chiffres secrets est obligatoirement nécessaire pour la génération du crédit et est enregistrée exclusivement sur le bon de valeur prépayé et non au niveau du prestataire de service,
**caractérisé en ce que**
la série de chiffes secrets est enregistrée sur le bon de valeur prépayé, de manière que, lors d'un accès à la série de chiffres, un changement déterminant du bon de valeur, doit obligatoirement être effectué et
la série de chiffres secrets présente une première et une deuxième partie d'ensembles, une série de données enregistrées à l'avance au niveau du prestataire de service étant déterminable avec l'aide de la première partie de l'ensemble et au moins une partie de la série de données guidables ensemble avec les premières et deuxième parties de l'ensemble vers le dispositif de vérification.

11. Bon de valeur prépayé selon la revendication 10, **caractérisé en ce que** le bon de valeur prépayé est constitué d'une carte en papier ou en plastique, sur laquelle la série de chiffres secrets est rapportée et est recouverte par une couche extractible.

12. Bon de valeur prépayé selon la revendication 10, **caractérisé en ce que** le bon de valeur prépayé consiste en une carte à puces avec des moyens de couplage par contact ou sans contact, la série de chiffres secrets étant enregistrée sur la puce de la carte à puces.

13. Bon de valeur prépayé selon la revendication 12, **caractérisé en ce que** la puce présente un champ de contact, qui est recouvert par la couche extractible, et la série de chiffres secrets est lisible par contact électrique du champ de contact.

14. Bon de valeur prépayé selon l'une des revendications 12 ou 13, **caractérisé en ce que** la puce de la carte à puces est réalisée de manière que au moins lors de la première lecture de la série de chiffres secrets, une information est obligatoirement enregistrée dans la puce, dont la lecture est possible.

15. Bon de valeur prépayé selon la revendication 10, **caractérisé en ce que** le bon de valeur prépayé consiste en une bande de papier ou de plastique, qui est pliée avec un rabattement fermé et est collée à ce rabattement, la série de signes secrets étant rapportée sur la face intérieure de la bande.

16. Bon de valeur prépayé selon la revendication 10, **caractérisé en ce que** le bon de valeur prépayé est constitué d'une bande en plastique ou en papier, qui est pliée avec un rabattement fermé et est collée à ce rabattement et enveloppe une autre bande de papier ou de plastique, sur laquelle est rapportée la série de signes secrets.

17. Bon de valeur prépayé selon l'une des revendications 15 ou 16, **caractérisé en ce que** plusieurs bons de valeur prépayés sont agencés les uns par rapport aux autres en arc et sont séparables.

18. Bon de valeur prépayé selon la revendication 10, **caractérisé en ce que** le bon de valeur est lié à un support virtuel.

19. Système pour générer un crédit auprès d'un prestataire de service avec un dispositif (13) de génération qui génère une série de signes secrets à partir de données d'accès,
un bon de valeur prépayé(17) sur lequel la série de signes secrets est enregistrée, qui est nécessaire pour la génération du crédit et qui est exclusivement enregistrée sur le bon de valeur prépayé et
un dispositif (22) de vérification qui vérifie la série de signes transmise au prestataire de service pour la génération du crédit et le cas échéant ordonner la génération d'un crédit,
**caractérisé en ce que**
une banque de données (16) est prévue auprès du prestataire de service, dans laquelle les données d'accès sont enregistrées,
la série de signes secrets est enregistrée sur le bon de valeur de sorte que, lors de l'accès à la série de signes, obligatoirement un changement déterminant du bon de valeur doit être effectué ou est effectué et
la série de signes secrets présente une première et une deuxième partie d'ensemble, une série de données enregistrées au préalable dans la banque de données du prestataire de service est accessible avec l'aide de la première partie d'ensemble, et au moins une partie de la série de données est guidable vers le dispositif de vérification ensemble avec la première et deuxième partie d'ensemble.
